# EUROPEAN PATENT APPLICATION

(11) **EP 2 635 041 A1**
(43) Date of publication of application: **04.09.2013**
(21) Application number: 12157566.6
(22) Date of filing: 29.02.2012
(51) Int. Cl.: H04N 21/482, G06F 3/048, H04N 21/431

(54) **Graphical user interface for television applications**

(71) Applicant: Novabase Digital TV Technologies GmbH, 85356 München (DE)
(72) Inventor: Pauli, Michael, 04105 Leipzig (DE)
(74) Representative: Maiwald Patentanwalts GmbH

(57) **Abstract**

Graphical user interface for displaying a menu structure 9 of a plurality of menu bullets on a display device 2 for an easy navigation and a good overview, wherein the menu structure comprises menu bullets into a first dimension 10, menu bullets into a second dimension 20 and menu bullets into a third dimension 30, wherein the first dimension of menu bullets and the second dimension of menu bullets are displayed parallel to a plane of the display device, wherein the third dimension of the menu bullets is displayed in a direction orthogonal to the plane of the display device.

## Description

### Field of the Invention

The present invention relates to a device and method for displaying a menu structure of a plurality of menu bullets on a display device, and in particular to a device and a method for displaying a menu structure allowing a user to interact and providing the user with a transparent structure of the menu bullets.

### Background of the Invention

Graphical user interfaces of the prior art include classic menu structures like pull-down menus or flip menus for providing a plurality of menu bullets on a display device. However, most of the presently known graphical user interfaces are not capable of providing the menu bullets in a transparent way, so that the user does not have a full overview over the menu structure. This is relevant in particular for menus of television programs.

### Summary of the Invention

The invention provides a device and a method for displaying a menu structure of a plurality of menu bullets on a display device allowing a user to interact with a corresponding program element and a computer readable medium, according to the subject-matter of the independent claims. Further embodiments are incorporated in the dependent claims.

It should be noted that the following described exemplary embodiments of the invention apply also for the method, the device, the program element and the computer readable medium.

According to an exemplary embodiment of the invention, there is provided a graphical user interface for displaying a menu structure of a plurality of menu bullets on a display device allowing a user to interact with, wherein the menu structure comprises menu bullets into a first dimension, menu bullets into a second dimension and menu bullets into a third dimension, wherein the first dimension of menu bullets and the second dimension of menu bullets are displayed in a plane of the display device, wherein the third dimension of the menu bullets is displayed in a direction orthogonal to the plane of the display device.

Thus, it is possible to give the user a transparent overview on the entire menu structure. The menu may provide three dimensions allowing a transparent presentation of the menu bullets and allowing the user to easily go through the menu and to select the respective menu bullet. Further, it is possible to reduce the effective way through the menu, as the menu provides a further dimension allowing shorter ways and fewer steps to arrive at a menu bullet compared to for example a two-dimensional menu structure. With this respect a menu bullet is an entity to be selected by a user. A menu bullet may have a sub-structure including a plurality of sub menu bullets. The sub menu bullets may also have a three dimensional structure like the menu bullets. A display device may be a monitor, a projector, a projection surface, a computer display a TV set or any other device being capable of illustrating a menu structure. The menu bullets of the first dimension and the second dimension, even if displayed in the plane of a display device, may be illustrated in a perspective way. The menu bullets into a third dimension may also be displayed in a perspective way. Orthogonal to the plane of the display device does not mandatory mean that the menu bullets are strictly arranged in a carthesian coordinate system, i.e. orthogonal to each other. Moreover, orthogonal generally means that the menu bullets of the third dimension are arranged "behind" those of the first and second dimension. In particular the menu bullets of the third dimension may be covered by those of the first and second dimension. It should be noted that the first dimension of menu bullets and the second dimension of menu bullets may also be displayed in a plane parallel to the display device.

According to an exemplary embodiment of the invention, the menu bullets represent television program units, wherein the menu bullets into the first dimension represent television program units of respective television channels on a first time scale, wherein the menu bullets into the second dimension represent television program units of respective broadcasting times of different television channels, wherein the menu bullets into the third dimension represent television program units of respective television channels on a second time scale, wherein the second time scale is larger than the first time scale.

Thus, it is possible for the user of the menu to arrive at corresponding menu bullets within a single step. For example, starting at a particular menu bullet of a particular television program unit, for example a movie, within a single step, the user may arrive at the succeeding television program unit, to a television program unit on a different channel at the same time, or at a respective television program unit of for example the next day. For this purpose, into a first dimension, succeeding television program units may be ranged so that into the first dimension succeeding television program units are presented on a first time scale. These television program units may be television program units of a particular channel. It should be noted that the presented television program units may be gapless or may also be a particular kind or selection of television programs like for example only movies or only news.

Further, menu bullets into the second dimension may be television program units of the same broadcasting times, but different television channels. Thus, the user, when moving into the second dimension, may change the television program between the respective channels. Thus, the menu bullets presented into the second dimension are alternative television programs at a particular time. The menu bullets into the third dimension may represent television program units in a larger time scale, for example one day later or one week later, so that the user when going into the third dimension may have an overview whether the respective television program units has a corresponding television program unit at the same time at the same channel but only one day or alternatively one week later. Thus, when providing the above described graphical user interface, the user may change either from one channel to the other or from one program unit to successive program unit or with respect to a corresponding program unit in a predetermined time unit later. The user may individually set the predetermined time unit. Additionally, a further dimension may be provided, wherein e.g. in the third dimension the predetermined time period may be one day and in the fourth dimension the predetermined time period may be one week.

It should be noted that the menu bullets into the first dimension may also represent television program units of respective broadcasting times of different television channels or television program units of respective television channels on the second time scale. Further, it should be noted that the menu bullets into the second dimension may represent television program units of respective television channels on a first time scale or television program units of respective television channels on the second time scale. Further, it should be noted that the menu bullets into the third dimension may represent television program units of respective television channels on a first time scale or television program units of respective broadcasting times of different television channels. In other words, the respective time scales may be allocated to the respective dimensions. This may happen individually by the user.

According to an exemplary embodiment of the invention, the menu bullets into the first dimension are television program units of successive broadcasting times of respective television channels.

Thus, it is possible for the user when maintaining the respective television channel, to go through the successive program units by moving along the first dimension of the menu.

According to an exemplary embodiment of the invention, the menu bullets into the third dimension are television program units of the same broadcasting daytime, but successive broadcasting days. According to an exemplary embodiment of the invention, the menu bullets into the third dimension are television program units of the same broadcasting daytime but successive broadcasting weeks. As an alternative, the menu bullets into the third dimension are television program units of the same broadcasting daytime but successive broadcasting months or any other time period.

Thus, it is possible for the user to check out television programs which are periodically repeated, like for example series or daily and weekly soaps, respectively.

According to an exemplary embodiment of the invention, the graphical user interface is switchable upon user action with respect to the third dimension between successive broadcasting days and successive broadcasting weeks. As an alternative, it is possible to switch with respect to the third dimension between successive broadcasting weeks and successive broadcasting months or between successive broadcasting days and successive broadcasting months.

Thus, it is possible to adapt upon user action the dimension of the entire menu, so that the menu may be adapted to the user behavior. As an alternative the menus structure may have a fourth dimension for an additional

According to an exemplary embodiment of the invention, the menu bullets into a respective dimension are linked so as to form chain lines, wherein the chain lines into the first dimension are closed loops, wherein the last menu bullet of a respective chain line is linked with the first menu bullet of that chain line of the same level in the third dimension.

Thus, it is possible to keep the user movement within the respective dimension, so that the user, when going through the successive program units, may arrive at the starting point of the menu, for example the presently selected channel at the present daytime. For this purpose, for example the last program unit of a particular day may be linked to the first program unit of the same day.

According to an exemplary embodiment of the invention, the menu bullets into a respective dimension are linked so as to form chain lines, wherein the chain lines into the first dimension are spiral chain lines, so that the last menu bullet of a first chain line in a first level of the third dimension is linked with the first menu bullet of a second chain line in a second level of the third dimension, wherein the first level and the second level are adjacent levels.

Thus, it is possible for the user to continuously go through the program along the second dimension. Thus, when arriving at the last program unit of a particular day, the successive program unit is the first program unit of the successive day. If the user goes on, and he arrives at the same daytime of the present channel, but for example at the next day which is represented in a second level. Thus, it is possible to have a continuous time scale and to automatically arrive at future program units without a step back to the first program unit of the present day. With this menu structure, it is easy for the user to move back along the third dimension to arrive at the present program unit.

According to an exemplary embodiment of the invention, the menu bullets into the first and second dimensions in a first level of the third dimension are displayed so as to be recognized as a first sphere, wherein the menu bullets into the first and second dimensions of a second level of the third dimension being adjacent to the first level of the third dimension are displayed so as to be recognized as a second sphere being concentric to the first sphere.

The structure of the menu bullets onto a sphere allows the user to maintain the overview, as the user may stay on a particular sphere when flipping either through the channel or through the short time scale for successive program units. On the other hand, when jumping from one sphere to an adjacent sphere, the user directly recognizes that he arrives at a corresponding program unit of a successive day, a successive week and a successive month, respectively. The recognition may be supported by a particular color design.

According to an exemplary embodiment of the invention, the plurality of menu bullets in a first level of the third dimension are displayed distant to each other, so that a user may recognize the menu bullets on a second level of the third dimension behind the first level of the third dimension.

Thus, for the user it may appear to enter into the present sphere to arrive at a later day program unit or leaving the sphere backwards and arriving at a preceding day program unit.

According to an exemplary embodiment of the invention, there is provided a three-dimensional graphic display having implemented the graphical user interface according to the above described embodiments, wherein the menu structure comprises a plurality of menu bullets which menu bullets are displayed so as to be recognized by a user as a three-dimensional menu obj ect.

Thus, it is more transparent to the user what options are available in particular on the larger time scale being represented as the third dimension of the graphical user interface. This may be of relevance, when rotating the respective spheres of the graphical user interface, so as to have the menu bullets visible, which are arranged into the third dimension behind each other. Thus, when rotating the respective spheres of the graphical user interface, the user may see also program units in the third dimension to obtain a better overview on the entirely presented menu bullets.

According to an exemplary embodiment of the invention, the menu structure comprises a plurality of menu bullets, which are displayed so as to be recognized by a user as a three-dimensional spherical menu object, wherein the first dimension and the second dimension in one level of the third dimension represent a sphere, wherein one sphere along the first dimension represents a plurality of television channels and along the second dimension a timescale of program units of the respective television channels, wherein a plurality of successive concentric spheres represent predefined successive time steps.

Thus, it is easy for a user to recognize the entire overview on the presented menu, wherein the illustration based on a sphere allows a representation of the information on a limited display space. Thus, displaying the menu as a three-dimensional spherical menu object allows the concentration of the information within a limited display space as menu bullets being farer away from the present menu bullet are displayed in a spherical distorted manner.

According to an exemplary embodiment of the invention, the three-dimensional graphic display device is a television set. As an alternative, the three-dimensional graphic display device may be a projector.

Thus, it is possible for a user to have a good overview on the entire menu bullets on for example a screen or a projection surface of a television set.

According to an exemplary embodiment of the invention, there is provided a virtual reality environment having implemented the graphical user interface according to the embodiments as described above, wherein the menu structure is displayed as a three-dimensional menu structure so as to be recognized by a user as a three-dimensional object.

Thus, it is possible for the user to have a virtual recognition of the entire menu structure.

It should be noted that the above features may also be combined. That combination of the above features may also lead to synergetic effects, even if not explicitly described in detail.

These and other aspects of the present invention will become apparent from and elucidated with reference to the embodiments described here and after.

### Brief Description of the Drawings

Exemplary embodiment of the present invention will be described in the following with reference to the following drawings.
- Fig. 1: illustrates a typical menu structure of a graphical user interface according to an exemplary embodiment of the invention.
- Fig. 2: illustrates an alternative structure of menu bullets according to an exemplary embodiment of the invention, wherein the menu bullets represent program units of different lengths and different starting and ending times.
- Fig. 3: illustrates a spherical representation of the menu structure of the graphical user interface, wherein successive program units are arranged in spiral-formed time scale.
- Fig. 4: illustrates a spherical representation of the menu structure according to an exemplary embodiment of the invention, wherein a time scale is structured as a closed loop.
- Fig. 5: illustrates a menu structure according to an exemplary embodiment of the invention, wherein the time scale is provided in a spiral form.
- Fig. 6: illustrates a time scale of a particular channel according to the spiral form track according to Fig. 5.
- Fig. 7: illustrates a closed loop time scale track according to the menu structure of Fig. 4.
- Fig. 8: illustrates a three-dimensional menu structure and a virtual reality on a display device or a three-dimensional graphic display device according to an exemplary embodiment of the invention.

### Detailed Description of Exemplary Embodiments

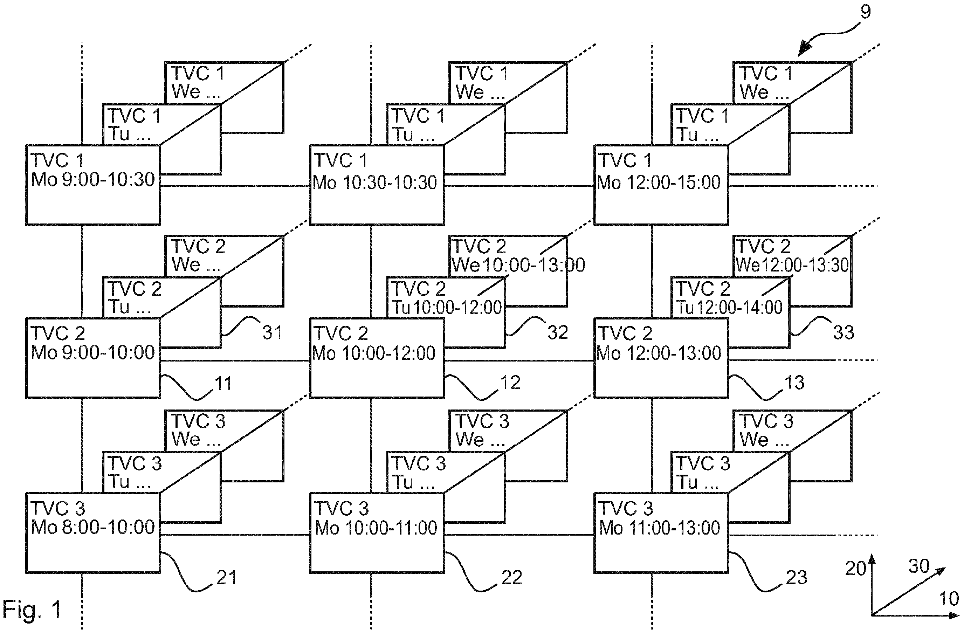

Fig. 1 illustrates an exemplary embodiment of a menu structure comprising a plurality of menu bullets 11, 12, 13; 21, 22, 23; 31, 32, 33. The menu structure 9 is a three-dimensional menu structure having a first dimension 10, a second dimension 20 and a third dimension 30. The first dimension 10 represents a first time scale. On a first time scale, successive program elements or program units are provided, which will be described in further detail with respect to the menu bullets 11, 12, 13. In the first dimension, i. e. the first time scale, for example for the second TV channel TVC2 the first program unit includes the broadcasting contents of a particular day, here Monday between 9:00 and 10:00 o'clock. The successive program unit 12 includes the successive program content of Monday 10:00 to 12:00 o'clock of the same TV channel TVC2, and the successive program unit 13 includes the program or broadcasting content of the second TV channel TVC2 of Monday 12:00 to 13:00 o'clock. Thus, the user, when moving along the first dimension of the first time scale, has a representation of here the second TV channel TVC2 with the successive broadcasting contents. If the user intends to move from TV channel 2 TVC2 to TV channel 1 TVC1, the user may move along the second dimension, which represents a list of TV channels. If the user intends to switch over to TV channel 1, he or she moves upward and if he or she intends to move to TV channel 3, he moves downward to TV channel 3 TVC3, represented by the menu bullet 22. However, if the user intends to learn the content of the program unit of e.g. a successive day, the user may move along the third dimension 30, to start from TV channel 2 TVC2, the menu bullets of the program content of Monday 10:00 to 12:00 o'clock to the content of Tuesday 10.00 to 12:00 o'clock by moving along the third dimension 30. In Fig. 1, the user then moves from menu bullet 12 to menu bullet 32. The illustration shown in Fig. 1 allows the user to not only recognize the program element of a plurality of TV channels TVC1 to TVC3 in this example, and the respective successive program elements on a first time scale, but also further program elements of the respective TV channels on a second time scale into the third dimension. Thus, the user may not only move within a level of the first dimension 10 and the second dimension 20, but also switch over from one level to a further level into the third dimension 30. Thus, the user may have a total overview over a wide range of program units and menu bullets and additionally has the possibility to easily navigate through the three-dimensional menu.

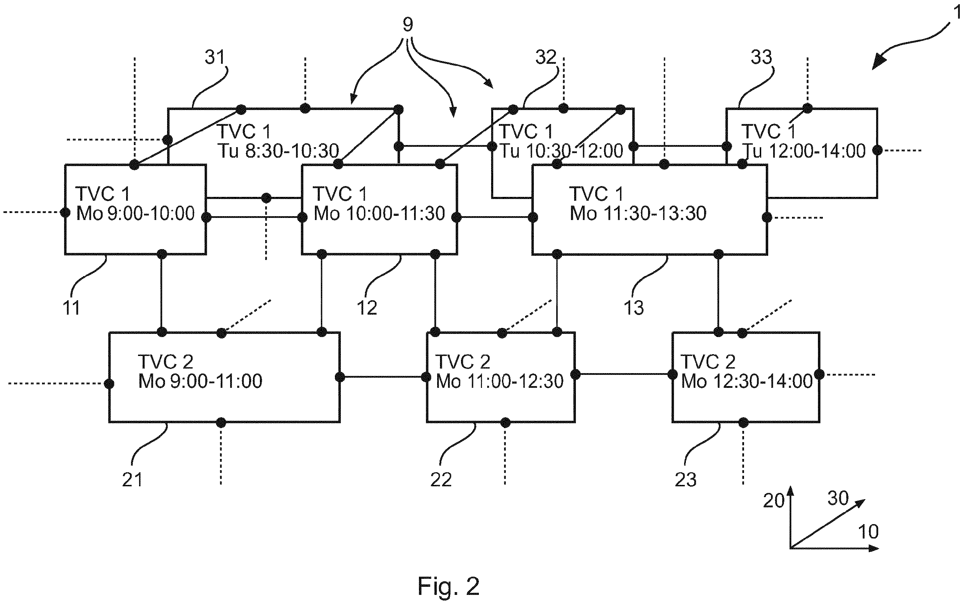

Fig. 1 illustrates menu bullets and program contents in regular steps providing a regular grid. However, the program units of different TV channels may be of different lengths, so that it may be of interest to provide a representative structure of the menu, so that the user clearly sees the equivalent point of time on the first time scale, as will be described in more detail with respective Fig. 2.

Fig. 2 illustrates an exemplary embodiment of a menu structure representing for example time shifts between program elements and broadcasting contents of several TV channels TVC1 and TVC2. As can be seen in Fig. 2, the time grid of TV channel 1 does not correspond to the time grid of TV channel 2. The program elements and broadcasting contents of TV channel 2 at least partially overlap with the contents of TV channel 1, so that a respective presentation of the broadcasting content in an overlapping structure allows a user to have a more representative illustration of the broadcasting contents. The same aspect of shifted broadcasting contents may occur between program elements of one TV channel but at successive days, as can be seen between the broadcasting contents of the menu bullets 11, 12, and 13 over the program contents of menu bullets 31, 32, and 33.

To increase the transparency of the navigation, the graphical user interface 1 may provide a kind of cursor in form of for example a thread representing the present time over the respective broadcasting contents, so that the user may immediately recognize the parallel program options between several TV channels. It should be noted that for sake of a transparent overview, such a cursor thread is not illustrated in Fig. 1 and Fig. 2. However, to give an illustrative example, for the time of 11:45, the cursor thread may run vertically through the menu bullet 12 and 22. It should be noted that a cursor thread may be provided with respect to the current time, but also with respect to a current time also to corresponding successive days, to increase the intelligibility of the menu structure. In the latter case the thread may be replaced by a plane representing the actual time.

If providing a large number of program units or broadcasting contents of a plurality of TV channels, the required space may be very large. Thus, it may be of interest to provide a menu structure being capable of illustrating the broadcasting contents and the program elements or menu bullets in an alternative way.

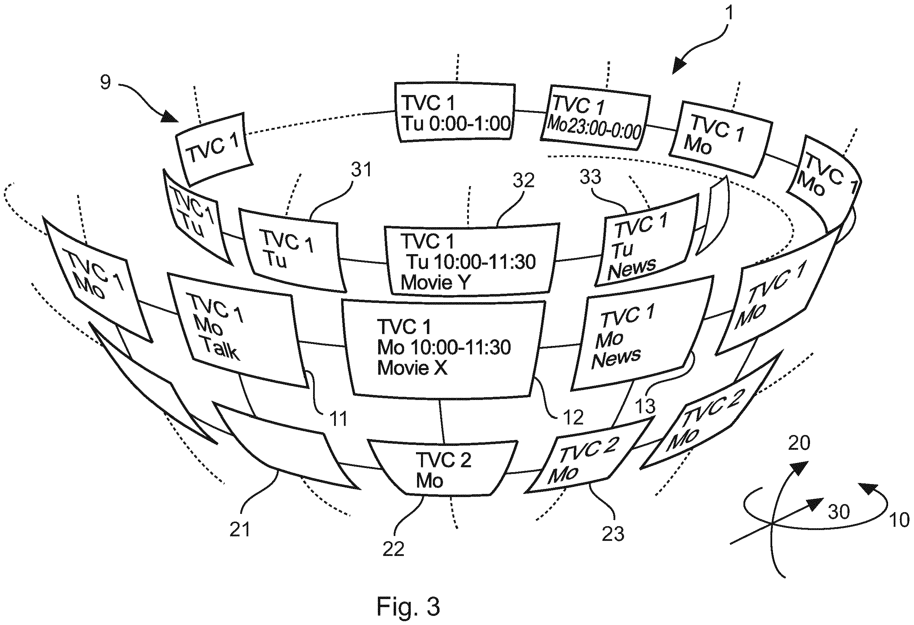

Fig. 3 illustrates an effective possibility of providing a large number of menu bullets on a limited space by using a kind of spherical illustration of the menu bullets. To maintain the overview in Fig. 3, the illustration of the menu bullets is in analogy to Fig. 1, i.e. having a regular grid of the menu bullets of different TV channels, different broadcasting times on the first time scale and broadcasting times on the second time scale. However, it should be noted that the menu structure of Fig. 2 may also be provided in a way as illustrated in Fig. 3. Fig. 3 illustrates a menu structure, where the user may move along a first time scale into the first dimension 10, so that successive program elements or broadcasting contents are provided in a row, as illustrated by menu bullets 11, 12, and 13. If the user moves on along that track, he will arrive at a broadcasting content which will be broadcasted at the end of the day, here Monday 23 :00 o'clock to midnight. To provide a continuous representation of the broadcasting content, the next program element will be that of Tuesday midnight to 1:00 o'clock. If moving on along that track, the user will arrive at a respective broadcasting content of TV channel 1 of the same daytime but the successive day in menu bullet 32. However, if starting from menu bullet 12 including the broadcasting content of Monday 10.00 to 11:30 o'clock to the corresponding broadcasting time of the successive day, the user may move along the third dimension to directly switch from menu bullet 12 to menu bullet 32. Thus, for the user is very easy and fast to receive corresponding broadcasting contents of successive days. It should be noted that an illustration of the graphical user interface may adaptively fade in and fade out program elements or menu bullets being farer away from the present menu position, so as to maintain the overview within the entire menu structure 9.

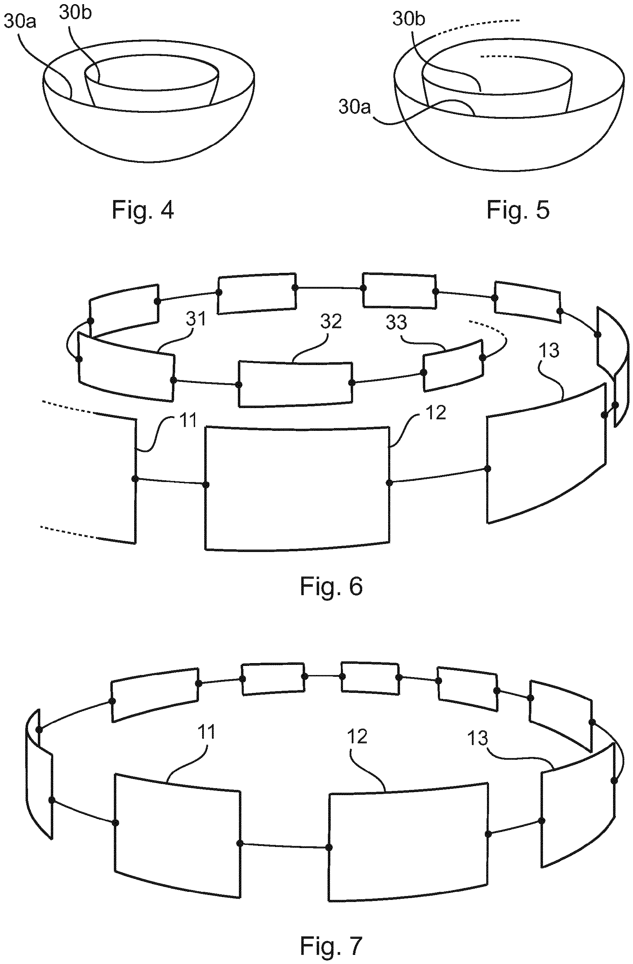

In general, the menu structure may be provided in a plurality of ways, which will be illustrated with respect to Figs. 4, 5, 6 and 7.

Fig. 4 illustrates a schematic illustration of a first level of the third dimension 30a and a second level of the third dimension 30b. When moving from menu bullet 12 in Fig. 3 to menu bullet 32 in Fig. 3, the user will move from the first level of the third dimension 30a to the second level of the third dimension 30b. Fig. 4 and Fig. 5 differ in the coupling of the menu bullets of the successive days. Fig. 4 illustrates separate levels in the third dimension, so that for example on a first level all menu bullets of a particular day can be illustrated. Thus, the user stays on the same level when switching through the menu bullets of a particular day. When switching the day, the user will have to move from one level to the other. However, it is also possible to provide a menu structure in a spiral form, so that the user, when switching through the menu bullets on a first time scale, will automatically arrive at the next level, so that a continuous representation of the time scale can be presented, even if arriving at the next day or the next week when moving along the first time scale. Fig. 6 and Fig. 7 illustrate the structure of one track along the first time scale. Fig. 6 illustrates the structure corresponding to Fig. 5, according to which, when moving along the first time scale from menu bullets 11, 12, 13, the user automatically will arrive at the menu bullets 31, 32, and 33 in the next level, which corresponds to the level 30b of Fig. 5.

Fig. 7 however illustrates a menu structure, wherein the menu bullets 11, 12, 13 correspond to e.g. a level 30a of Fig. 4, so that the user, when moving along the track of the first time scale, automatically arrives at the starting point of the menu, for example menu bullet 12.

It should be noted that the present cursor position may be represented by a highlighted frame or cursor arrow, wherein the menu structure remains almost unamended. However, it is also possible that the present cursor position maintains unamended, and the spheres and the time scales move with respect to the fixed cursor position. In this case, the menu bullets move like a carousel with respect to the fixed cursor position. The movement may be a movement in the first dimension, in the second dimension and also in a third dimension. On the other hand, the entire menu structure may remain unamended or may change with respect to the presently selected TV channel and the present time, wherein the cursor may move along the first, second or third dimension.

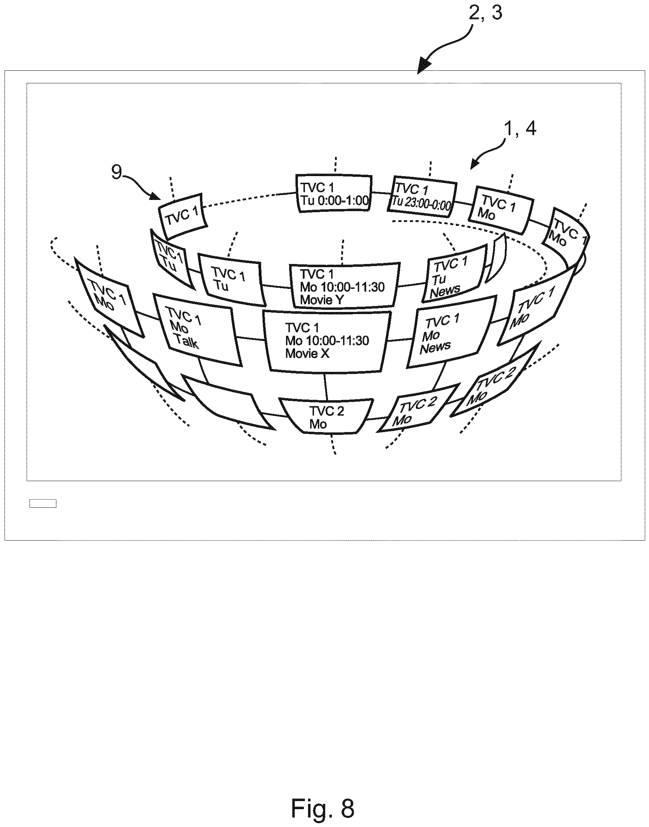

Fig. 8 illustrates a display device, which may be a monitor or a projection screen 2 as well as a three-dimensional graphic display device 3, like for example a three-dimensional TV set. The screen may illustrate the graphical user interface 1 including the menu structure 9.

It should be noted that the invention may also be applied to other menu applications and is not limited to menu applications of TV programs over several TV channels and broadcasting times.

It should be noted that the term "comprising" does not exclude other elements or steps and the "a" or "an" does not exclude a plurality. Also elements described in association with the different embodiments may be combined.

It should be noted that the reference sings and the claims shall not be construed as limiting to the scope of the claims.

### Reference list

- 1: graphical user interface
- 2: display device; monitor; projection screen
- 3: tree-dimensional graphic display device
- 4: virtual reality environment
- 9: menu structure
- 10: first dimension; first time scale
- 11, 12, 13: menu bullets of a first level of a first TV channel
- 20: second dimension; list of television channels
- 21, 22, 23: menu bullets of a first level of a second TV channel
- 30: third dimension; second time scale
- 30a: first level of the third dimension
- 30b: second level of the third dimension
- 31, 32, 33: menu bullets of a second level of a first TV channel
- TCV1, 2 ...: television channel 1, 2 ...

## Claims

1. Graphical user interface for displaying a menu structure (9) of a plurality of menu bullets (11, 12, 13; 21, 22, 23; 31, 32, 33) on a display device (2) allowing a user to interact with, wherein the menu structure comprises menu bullets into a first dimension (10), menu bullets into a second dimension (20) and menu bullets into a third dimension (30), wherein the first dimension of menu bullets and the second dimension of menu bullets are displayed in a plane of the display device, wherein the third dimension of the menu bullets is displayed in a direction orthogonal to the plane of the display device.

2. Graphical user interface according to claim 1, wherein the menu bullets represent television program units, wherein the menu bullets (11, 12, 13) into the first dimension (10) represent television program units of respective television channels on a first time scale, wherein the menu bullets (11, 21) into the second dimension (20) represent television program units of respective broadcasting times of different television channels, wherein the menu bullets (11, 31) into the third dimension (30) represent television program units of respective television channels on a second time scale, wherein the second time scale is larger than the first time scale.

3. Graphical user interface according to any one of claims 1 and 2, wherein the menu bullets (11, 12, 13) into the first dimension (10) are television program units of successive broadcasting times of respective television channels.

4. Graphical user interface according to any one of claims 1 to 3, wherein the menu bullets (11, 31) into the third dimension (30) are television program units of the same broadcasting daytime but successive broadcasting days.

5. Graphical user interface according to any one of claims 1 to 3, wherein the menu bullets (11, 31) into the third dimension (30) are television program units of the same broadcasting daytime but successive broadcasting weeks.

6. Graphical user interface according to any one of claims 1 to 5, wherein the graphical user interface (1) is switchable upon user action with respect to the third dimension (30) between successive broadcasting days and successive broadcasting weeks.

7. Graphical user interface according to any one of claims 1 to 6, wherein the menu bullets (11, 12, 13; 21, 22, 23; 31, 32, 33) into a respective dimension (10, 20, 30) are linked so as to form chain lines, wherein the chain lines into the first dimension (10) are closed loops, wherein the last menu bullet of a respective chain line is linked with the first menu bullet of that chain line of the same level (30a) into the third dimension (30).

8. Graphical user interface according to any one of claims 1 to 6, wherein the menu bullets (11, 12, 13; 21, 22, 23; 31, 32, 33) into a respective dimension (10, 20, 30) are linked so as to form chain lines, wherein the chain lines into the first dimension (10) are spiral chain lines, so that the last menu bullet of a first chain line in a first level (30a) of the third dimension (30) is linked with the first menu bullet of a second chain line in a second level (30b) of the third dimension, wherein the first level and the second level are adjacent levels.

9. Graphical user interface according to any one of claims 1 to 8, wherein menu bullets (11, 12, 13; 21, 22, 23; 31, 32, 33) into the first and second dimensions (10, 20) in a first level (30a) of the third dimension (30) are displayed so as to be recognized as a first sphere, wherein the menu bullets into the first and second dimensions of a second level (30b) of the third dimension being adjacent to the first level of the third dimension are displayed so as to be recognized as a second sphere being concentric to the first sphere.

10. Graphical user interface according to any one of claims 1 to 9, wherein the plurality of menu bullets (11, 12, 13; 21, 22, 23; 31, 32, 33) in a first level (30a) of the third dimension are displayed distant to each other, so that a user may recognize the menu bullets on a second level (30b) of the third dimension behind the first level of the third dimension.

11. Three-dimensional graphic display having implemented the graphical user interface (1) according to any one of claims 1 to 10, wherein the menu structure (9) comprising a plurality of menu bullets (11, 12, 13; 21, 22, 23; 31, 32, 33) is displayed so as to be recognized by a user (99) as a three dimensional menu object.

12. Three-dimensional graphic display according to claim 11, wherein the menu structure (9) comprising a plurality of menu bullets is displayed so as to be recognized by a user (99) as a three dimensional spherical menu object, wherein the first dimension (10) and the second dimension (20) in one level (30a) of the third dimension (30) represent a sphere, wherein one sphere represents into the first dimension a plurality of television channels and into the second dimension a timescale of program units of the respective television channels, wherein a plurality of successive concentric spheres represent predefined successive time steps.

13. Three-dimensional graphic display according to any one of claims 11 to 12, wherein the tree-dimensional graphic display device (3) is a television set.

14. Virtual reality environment having implemented the graphical user interface (1) according to any one of claims 1 to 10, wherein the menu structure (9) is displayed as a three-dimensional menu structure so as to be recognized by a user (99) as a three dimensional object.

## Amended claims

### Amended claims in accordance with Rule 137(2) EPC.

**1.** Graphical user interface for displaying a menu structure (9) of a plurality of menu bullets (11, 12, 13; 21, 22, 23; 31, 32, 33) on a display device (2) allowing a user to interact with, wherein the menu structure comprises menu bullets into a first dimension (10), menu bullets into a second dimension (20) and menu bullets into a third dimension (30), wherein the first dimension of menu bullets and the second dimension of menu bullets are displayed in a plane of the display device, wherein the third dimension of the menu bullets is displayed in a direction orthogonal to the plane of the display device,
characterizes in that
the menu bullets (11, 12, 13; 21, 22, 23; 31, 32, 33) into the first and second dimensions (10, 20) in a first level (30a) of the third dimension (30) are displayed so as to be recognized as a first sphere, wherein the menu bullets into the first and second dimensions of a second level (30b) of the third dimension being adjacent to the first level of the third dimension are displayed so as to be recognized as a second sphere being concentric to the first sphere.

**2.** Graphical user interface according to claim 1, wherein the menu bullets represent television program units, wherein the menu bullets (11, 12, 13) into the first dimension (10) represent television program units of respective television channels on a first time scale, wherein the menu bullets (11, 21) into the second dimension (20) represent television program units of respective broadcasting times of different television channels, wherein the menu bullets (11, 31) into the third dimension (30) represent television program units of respective television channels on a second time scale, wherein the second time scale is larger than the first time scale.

**3.** Graphical user interface according to any one of claims 1 and 2, wherein the menu bullets (11, 12, 13) into the first dimension (10) are television program units of successive broadcasting times of respective television channels.

**4.** Graphical user interface according to any one of claims 1 to 3, wherein the menu bullets (11, 31) into the third dimension (30) are television program units of the same broadcasting daytime but successive broadcasting days.

**5.** Graphical user interface according to any one of claims 1 to 3, wherein the menu bullets (11, 31) into the third dimension (30) are television program units of the same broadcasting daytime but successive broadcasting weeks.

**6.** Graphical user interface according to any one of claims 1 to 5, wherein the graphical user interface (1) is switchable upon user action with respect to the third dimension (30) between successive broadcasting days and successive broadcasting weeks.

**7.** Graphical user interface according to any one of claims 1 to 6, wherein the menu bullets (11, 12, 13; 21, 22, 23; 31, 32, 33) into a respective dimension (10, 20, 30) are linked so as to form chain lines, wherein the chain lines into the first dimension (10) are closed loops, wherein the last menu bullet of a respective chain line is linked with the first menu bullet of that chain line of the same level (30a) into the third dimension (30).

**8.** Graphical user interface according to any one of claims 1 to 6, wherein the menu bullets (11, 12, 13; 21, 22, 23; 31, 32, 33) into a respective dimension (10, 20, 30) are linked so as to form chain lines, wherein the chain lines into the first dimension (10) are spiral chain lines, so that the last menu bullet of a first chain line in a first level (30a) of the third dimension (30) is linked with the first menu bullet of a second chain line in a second level (30b) of the third dimension, wherein the first level and the second level are adjacent levels.

**9.** Graphical user interface according to any one of claims 1 to 8, wherein the plurality of menu bullets (11, 12, 13; 21, 22, 23; 31, 32, 33) in a first level (30a) of the third dimension are displayed distant to each other, so that a user may recognize the menu bullets on a second level (30b) of the third dimension behind the first level of the third dimension.

**10.** Three-dimensional graphic display having implemented the graphical user interface (1) according to any one of claims 1 to 9, wherein the menu structure (9) comprising a plurality of menu bullets (11, 12, 13; 21, 22, 23; 31, 32, 33) is displayed so as to be recognized by a user (99) as a three dimensional menu object.

**11.** Three-dimensional graphic display according to claim 10, wherein the menu structure (9) comprising a plurality of menu bullets is displayed so as to be recognized by a user (99) as a three dimensional spherical menu object, wherein the first dimension (10) and the second dimension (20) in one level (30a) of the third dimension (30) represent a sphere, wherein one sphere represents into the first dimension a plurality of television channels and into the second dimension a timescale of program units of the respective television channels, wherein a plurality of successive concentric spheres represent predefined successive time steps.

**12.** Three-dimensional graphic display according to any one of claims 10 to 11, wherein the tree-dimensional graphic display device (3) is a television set.

**13.** Virtual reality environment having implemented the graphical user interface (1) according to any one of claims 1 to 9, wherein the menu structure (9) is displayed as a three-dimensional menu structure so as to be recognized by a user (99) as a three dimensional object.
